# EUROPEAN PATENT SPECIFICATION

(11) **EP 1 442 581 B1**
(45) Date of publication and mention of the grant of the patent: **11.07.2012**
(21) Application number: 02802793.6
(22) Date of filing: 15.10.2002
(51) Int. Cl.: H04W 12/08

(54) **DELIVERY POLICY TOOL**
ABLIEFERUNGSRICHTLINIENWERK ZEUG
OUTIL DE MISE EN OEUVRE DE POLITIQUES DE DISTRIBUTION

(30) Priority: 06.11.2001 US 992150
(43) Date of publication of application: 04.08.2004
(73) Proprietor: The Boeing Company, Seattle, WA 98124-2207 (US)
(72) Inventor: TAYLOR, Scott, P., Renton, WA 98055 (US)
(74) Representative: Steil, Christian
(86) International application number: PCT/US2002/033109
(87) International publication number: WO 2003/041359

(56) References cited:
- EP-A2- 1 139 608
- WO-A-01/43390
- US-A- 5 463 656

## Description

The present invention relates generally to mobile communication systems and more particularly to systems and methods for controlling the distribution of data to mobile platforms such as commercial aircraft.

Broadband data and video services have previously been unavailable to users onboard mobile platforms such as aircraft, ships, trains, automobiles, and other modes of mass transportation. While the technology is available to deliver such services to various forms of mobile platforms, past solutions have been generally expensive, of a low data rate, and/or available only to limited markets of government or military users and a few high-end maritime markets (e.g., cruise ships).

Previously developed systems that have attempted to provide data services to mobile platforms have done so with only limited success. One major obstacle has been the high cost of access to broadband data services, along with the limited capacity of previously developed systems, which is insufficient for a plurality of mobile platforms collectively carrying hundreds, or even thousands, of individuals who each may be simultaneously requesting different data services. Furthermore, existing mobile communications systems are generally not readily scalable to address the demands of the traveling public.

Current mobile platform connection methods are inherently narrow band and restrict the flow of data to the point where common networking tasks are impossible. Typically, such connectivity is achieved through the use of a standard computer telephone modem between the computer of the user and the air-ground or ship-shore telephone system. In such a system, each user obtains exclusive use of a full communications channel for the duration of his/her networking session and effectively prevents others from using that portion of the telephone, system.

Another known mobile communication service generally provides pre-stored worldwide web content to users on a mobile platform. The service is anticipated to incorporate a server located on a mobile platform to provide its stored content to users on the mobile platform through a simple touchscreen interface. The content located on the server would be updated once every few weeks while the mobile platform is in an inactive mode, such as when an aircraft is parked at an airport gate or a ship is docked at a port. The update of the data on the mobile platform would be accomplished through the loading of CD ROMs (Compact Disc Read Only Memory) or swapping of hard drives on the server. Although the content stored on the mobile platform with such a service may be varied, it will never be timely and up to date.

In view of the foregoing, a significant need exists to provide a system and method for providing live and up to date data communication to users onboard mobile platforms. More specifically, a need exists to provide Internet data communications, (e.g., web page content delivery), video data services, and audio data services, among others, in a timely fashion to a variety of users onboard a plurality of mobile platforms.

The document WO 01/43390 relates to a service management access node. An access node has a portal which performs interfacing between a wireless network domain and content/service providers in the Internet. On the wireless side the portal is linked with a SMSC, a CBC, and a USSD server for interfacing with and management of bearer stacks. Service functionality includes modular systems including a Push server, a Pre-paid calling server, and a location server in addition to internal portal functions. The latter provide portal for subscriber self-provisioning, customer care provisioning, subscriber device provisioning, and service provisioning. Thus, the node caters for both particular subscriber service and mobile device requirements.

The document EP 1 139 608 discloses a method and system for providing client configurable data services for mobile stations allowing mobile stations to select the type and content of data messages addressed to a mobile station. The method includes the client establishing an active profile associated with a corresponding mobile station. A wireless data server receives a data message addressed to the mobile station. The active profile for the mobile station is accessed to determine applicable stored profile attributes for the mobile station to which the received data is addressed. A profile refers to at least one filtering instruction or rule applicable in an incoming communication, such as a data message addressed to the mobile station. Filtering instructions or rules control the delivery, re-direction, deletion, content manipulation, priority, or other aspects of communication of data messages controllable by a wireless data server. The result of the filtering may be used to block, path, alter the content of data messages at the wireless data server in a manner consistent with efficient utilization of an air interface between a base station subsystem and the mobile station.

### SUMMARY

In one preferred form, the present invention provides a system for distributing content according to claim 1.

The policy algorithm is further in communication with a link management system that provides information regarding available mobile platforms, or aircraft that are currently in route and are requiring content delivery. Additionally, the policy algorithm is in communication with a plurality of buffers that provide increased bandwidth utilization. Generally, the buffers are monitored by the policy algorithm to determine the percent loading on each buffer and thus how content is to be redistributed to the mobile platforms.

The database and the policy algorithm are preferably located within a ground control station that communicates with the mobile platforms via satellite communications as described in co-pending application serial number 09/639,912 entitled "Method and Apparatus For Providing BiDirectional Data Services and Live Television Programming to Mobile Platforms," filed on August 16, 2000, which is assigned to the assignee of the present application.

In another preferred form, a method of distributing content to a mobile platform is provided, wherein the content is prioritized and delivered to a variety of users onboard a plurality of mobile platforms based in part on execution of rules by the policy algorithm. Generally, output from the policy algorithm is transmitted to the content delivery system, wherein prioritized content is communicated from the policy algorithm to the content delivery system, and the content is delivered accordingly to the mobile platforms based on the rules within the database and the priorities determined by the policy algorithm. Further, the method comprises the steps of providing information regarding available mobile platforms from the link management system in addition to monitoring the plurality of buffers to determine when content is to be redistributed.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:

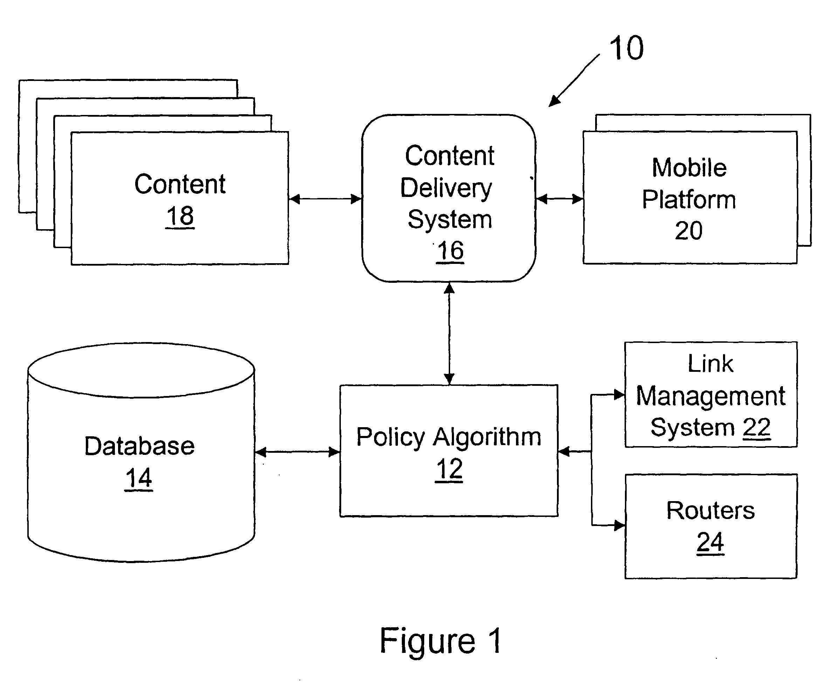

Figure 1 is a block diagram of a system for distributing content to a mobile platform.

The following description of the preferred embodiments is merely exemplary in nature and is in no way intended to limit the invention, its application, or uses.

Referring to the drawings, a system for distributing content to a mobile platform according to the present invention is illustrated and generally indicated by reference numeral 10 in Figure 1. As shown, the system 10 comprises a policy algorithm 12 in communication with a database 14 and a content delivery system 16, wherein the content delivery system 16 manages and controls delivery of content 18 to a mobile platform 20, or a plurality thereof.

Although the detailed description herein is directed to an in-flight system delivering content to passengers on commercial aircraft, the invention is also applicable to other modes of mass transit such as ship, train, bus, and others, and the reference to aircraft should not be construed as limiting the scope of the present invention. Further, the term "content" as used herein is intended to include communications data such as Internet web content, audio data such as in-flight music or boarding messages, video data such as in-flight entertainment, or cellular data, among others.

The policy algorithm 12 is executed in part based on a set of rules within the database 14 for distribution of the content 18. For example, the rules may prioritize one set of users over another such as first class passengers over coach or one airline over another, or may vary web page update rates to suit the needs of a particular user or set of users. Further, the rules may establish specific mobile platforms as having priority for a particular type of content. Accordingly, the content delivery system 16 delivers content that has been prioritized by the policy algorithm 12 to the mobile platform 20 based on a flexible set of rules within the database 14, which results in more efficient delivery of data to a plurality of mobile platforms 20.

As further shown, the policy algorithm 12 is in communication with a link management system 22. The link management system 22 provides information as to which mobile platforms 20 are available to receive content 18. Accordingly, the policy algorithm 12 utilizes such information, along with the rules within the database 14, in order to prioritize delivery of the content 18 to the content delivery system 16. For example, the database 14 may contain a rule that an aircraft having a certain tail number requires only certain types of content 18. Further, the policy algorithm 12 may be executed such that certain aircraft tail numbers that require a particular type of content, e.g. specific Internet web sites, are given top priority. Therefore, any number and combination of rules within the database 14 and priorities within the policy algorithm 12 may be employed to control distribution of content 18 to the mobile platform 20 according to specific application requirements.

As further illustrated, the policy algorithm 12 is also in communication with a plurality of routers 24. Generally, the routers 24 distribute data that is being transmitted through various RF (radio frequency) links to satellites that communicate with ground control stations. In operation, the policy algorithm 12 monitors the routers 24 to determine the loading on each buffer, and the policy algorithm 12 may then execute priorities according to such loadings. For example, content 18 may only be redistributed to the content delivery system 16 if the buffers are at 50% or less of their capacity. As a result, improvements in bandwidth utilization may be realized to facilitate efficient delivery of content 18 to the mobile platform 20.

Accordingly, a system and method for distributing content to a mobile platform is provided, wherein content is delivered to a plurality of mobile platforms in a prioritized order based on a number of inputs from, for example, rules within a database, a link management system, and a plurality of routers. As a result, content is delivered to users onboard mobile platforms in a timely and cost-efficient manner.

The description of the invention is merely exemplary in nature and, thus, variations that do not depart from the substance of the invention are intended to be within the scope of the invention. Such variations are not to be regarded as a departure from the scope of the invention.

## Claims

1. A system (10) for distributing content (18) to a plurality of users onboard a mobile platform (20) via satellite communication comprising:
a database (14) containing rules for distribution of the content (18);
a policy algorithm (12) in communication witch the database (14);
a content delivery system (16); and
a plurality of buffers in communication with the content delivery system (16) via the policy algorithm (12);
wherein the policy algorithm (12) is adapted to prioritize the content (18) from the buffers according to the rules from the database (14) and to communicate the prioritized content (18) to the content delivery system (16) to control distribution of the content (18) to the mobile platform (20), wherein the policy algorithm (12) is adapted to monitor the buffers for determining a loading on each buffer and to execute priorities according to determined loadings.

2. The system of claim 1, further comprising a link management system (22) in communication with the policy algorithm (12), wherein the link management system (22) provides the policy algorithm (12) with information on available mobile platforms (20).

3. The system of claim 1 or 2, wherein the database (14) and policy algorithm (12) are located within a ground control station in communication with the mobile platform (20).

4. The system of claim 3, wherein the ground control station is in communication with the mobile platform (20) via satellite communication.

5. The system of one of claims 1 to 4, wherein the content (18) comprises Internet web pages, audio data, or video data.

6. The system of one of claims 1 to 5, wherein the policy algorithm (12) is stored in the database (14).

7. A method of distributing content (18) to a plurality of users onboard a mobile platform (20) via satellite communications, comprising the steps of:
(a) executing a policy algorithm (12) in communication with a database (14) having rules for distribution of the content (18) in order to prioritize the content (18);
(b) monitoring loading on a plurality of buffers;
(c) transmitting output from the policy algorithm (12) to a content deliver system. (16); and
(d) distributing content (18) to the mobile platform (20) based on the rules within the database (14).

8. The method of claim 7, further comprising the step of providing information on available mobile platforms (20) from a link management system (16) to the policy algorithm (12).

## Patentansprüche

1. System (10) zum Verbreiten eines Inhalts (18) an eine Vielzahl von Nutzern an Bord einer mobilen Plattform (20) über eine Satellitenkommunikation aufweisend:
eine Datenbasis (14), die Regeln zum Verteilen des Inhalts (18) aufweist;
einen Verfahrensalgorithmus (12), der mit der Datenbasis (14) kommuniziert;
ein Inhaltsbereitstellungssystem (16); und
eine Vielzahl von Puffern, die mit dem Inhaltsbereitstellungssystem (16) über den Verfahrensalgorithmus (12) in Verbindung stehen;
wobei der Verfahrensalgorithmus (12) angepasst ist, den Inhalt (18) der Puffer gemäß den Regeln der Datenbasis (14) zu priorisieren und den priorisierten Inhalt (14) an das Inhaltsbereitstellungssystem (16) zu kommunizieren, um eine Verteilung des Inhalts (18) an die mobile Plattform (20) zu steuern, wobei der Verfahrensalgorithmus (12) angepasst ist, die Puffer zum Bestimmen einer Belastung jedes Puffers zu überwachten und um Prioritäten gemäß der bestimmten Belastungen auszuführen.

2. System nach Anspruch 1, das des Weiteren ein Verbindungsverwaltungssystem (22) aufweist, welches mit dem Verfahrensalgorithmus (12) kommuniziert, wobei das Verbindungsverwaltungssystem (22) den Verfahrensalgorithmus (12) mit einer Information hinsichtlich zur Verfügung stehender mobiler Plattformen (20) versorgt.

3. System nach Anspruch 1 oder 2, wobei die Datenbasis (14) und der Verfahrensalgorithmus (12) in einer Bodenkontrollstation angeordnet sind, die mit der mobilen Plattform (20) kommuniziert.

4. System nach Anspruch 3, wobei die Bodenkontrollstation mit der mobilen Plattform (20) über eine Satellitenkommunikation kommuniziert.

5. System nach einem der Ansprüche 1 bis 4, wobei der Inhalt (18) Internetseiten, Audiodaten oder Videodaten aufweist.

6. System nach einem der Ansprüche 1 bis 5, wobei der Verfahrensalgorithmus (12) in der Datenbasis (14) gespeichert ist.

7. Verfahren zum Verteilen eines Inhalts (18) an eine Vielzahl von Nutzern an Bord einer mobilen Plattform (20) über Satellitenkommunikationen, wobei das Verfahren die folgenden Schritte aufweist:
(a) Ausführen eines Vertahrensalgorithmus (12), der mit einer Datenbasis (14) kommuniziert, die Regeln zum Verteilen des Inhalts (18) aufweist, um den Inhalt (18) zu priorisieren;
(b) Überwachen einer Belastung von einer Vielzahl von Puffern;
(c) Übertragen einer Ausgabe vom Verfahrensalgorithmus (12) an ein Inhaltsbereitstellungssystem (16); und
(d) Verteilen eines Inhalts (18) an die mobile Plattform (20) basierend auf den Regeln innerhalb der Datenbasis (14).

8. Verfahren nach Anspruch 7, das des Weiteren den Schritt eines Vorsehens einer Information hinsichtlich zur Verfügung stehender mobilen Plattformen (20) von einem Verbindungsverwaltungssystem (16) an den Verfahrensalgorithmus (12) aufweist.

## Revendications

1. Système (10) pour distribuer du contenu (18) à une pluralité d'utilisateurs à bord d'une plateforme mobile (20) au moyen de communications par satellite comprenant :
une base de données (14) contenant des règles pour la distribution du contenu (18) ;
un algorithme de mise en oeuvre de politique (12) en communication avec la base de données (14) ;
un système de diffusion de contenu (16) ; et
une pluralité de mémoires tampons en communication avec le système de diffusion de contenu (16) via l'algorithme de mise en oeuvre de politique (12) ;
dans lequel l'algorithme de mise en oeuvre de politique (12) est adapté de façon à établir l'ordre de priorité du contenu (18) venant des mémoires tampons selon les règles dans la base de données (14) et à communiquer le contenu classé par ordre de priorité (18) au système de diffusion de contenu (16) afin de contrôler la distribution du contenu (18) à la plateforme mobile (20), l'algorithme de mise en oeuvre de politique (12) étant adapté de façon à surveiller les mémoires tampons afin de déterminer un chargement sur chaque mémoire tampon et à exécuter les priorités selon des chargements déterminés.

2. Système selon la revendication 1, comprenant en outre un système de gestion de liaison (22) en communication avec l'algorithme de mise en oeuvre de politique (12), ce système de gestion de liaison (22) fournissant à l'algorithme de mise en oeuvre de politique (12) une information sur les plateformes mobiles disponibles (20).

3. Système selon la revendication 1 ou 2, dans lequel la base de données (14) et l'algorithme de mise en oeuvre de politique (12) sont situés à l'intérieur d'un poste de contrôle au sol en communication avec la plateforme mobile (20).

4. Système selon la revendication 3, dans lequel le poste de contrôle au sol est en communication avec la plateforme mobile (20) au moyen de communications par satellite.

5. Système selon l'une quelconque des revendications 1 à 4, dans lequel le contenu (18) comprend des pages Web, des données audio ou des données vidéo.

6. Système selon l'une quelconque des revendications 1 à 5, dans lequel l'algorithme de mise en oeuvre de politique (12) est stocké dans la base de données (14).

7. Procédé de distribution de contenu (18) à une pluralité d'utilisateurs à bord d'une plateforme mobile (20) au moyen de communications par satellite, comprenant les étapes consistant à :
(a) exécuter un algorithme de mise en oeuvre de politique (12) en communication avec une base de données (14) ayant des règles pour la distribution du contenu (18) afin d'établir l'ordre de priorité du contenu (18) ;
(b) surveiller le chargement sur une pluralité de mémoires tampons ;
(c) transmettre la sortie de l'algorithme de mise en oeuvre de politique (12) à un système de diffusion de contenu (16) ; et à
(d) distribuer le contenu (18) à la plateforme mobile (20) en se basant sur les règles dans la base de données (14).

8. Procédé selon la revendication 7, comprenant en outre l'étape consistant à fournir à l'algorithme de mise en oeuvre de politique (12) une information sur les plateformes mobiles (20) depuis un système de gestion de liaison (16).
